(19) Europäisches Patentamt
European Patent Office
Office européen des brevets

(11) **EP 2 525 578 A1**

(12) **DEMANDE DE BREVET EUROPEEN**

(43) Date de publication:
**21.11.2012 Bulletin 2012/47**

(51) Int Cl.:
*H04N 13/00* (2006.01)

(21) Numéro de dépôt: **11186955.8**

(22) Date de dépôt: **27.10.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **19.05.2011 EP 11305612**

(71) Demandeur: **Thomson Licensing
92130 Issy-les-Moulineaux (FR)**

(72) Inventeurs:
• **Blonde, Laurent
35510 Cesson Sevigne (FR)**
• **Vienne, Cyril
35510 Cesson Sevigne (FR)**
• **Doyen, Didier
35510 Cesson Sevigne (FR)**

(74) Mandataire: **Browaeys, Jean-Philippe et al
Technicolor
European Patent Operations
1, rue Jeanne d'Arc
92443 Issy-les-Moulineaux, Cedex (FR)**

(54) **Méthode d'ajustement de disparité d'un contenu 3D pour un observateur**

(57) L'invention concerne une méthode d'ajustement de la disparité d'un contenu 3D pour un observateur des images 3D de ce contenu. Cette méthode comprend les étapes de réaliser une série de tests pour en déduire les valeurs du seuil de convergence et du seuil de divergence de l'observateur, puis de déterminer la valeur de disparité maximale et la valeur de disparité minimale du contenu 3D initial et enfin de modifier les valeurs de disparité du contenu 3D initial de façon à ce que les valeurs de disparités maximale et minimale du contenu modifié correspondent aux valeurs de seuils de divergence et convergence respectivement.

Figure 1

**Description**

L'invention concerne une méthode d'ajustement de disparité d'un contenu 3D pour un observateur. Elle se situe dans le domaine du rendu 3D. Il est entendu que le contenu vidéo présenté ou traité dans le cadre de l'invention est un contenu 3D, stéréoscopique ou multi-vues.

Les écrans 3D ou multivues montrent aux observateurs des images calculées pour chacun des deux yeux, ou pour diverses positions de ceux-ci. Ces images présentent des disparités, c'est-à-dire des décalages entre vues. Ces décalages, principalement horizontaux, affectent les objets ou les contours de la scène et définissent ainsi une profondeur pour chacun d'eux. Le système visuel humain va chercher à apparier les contours pour reconstruire une information de profondeur. Cet appariement pourra se faire :

Soit sans déplacement des yeux au sein d'une zone visuelle appelée « zone de Panum ». Dans cette zone, correspondant à une distance de fixation donnée, les points ou contours sont vus sans dédoublement. Il s'agit d'un état de fusion.

Soit, pour des points plus proches ou plus éloignés, il faudra un mouvement des yeux, de convergence ou de divergence, pour percevoir comme point simples des points ou contours précédemment dédoublés. Il s'agit d'un état de diplopie.

De plus, il y a de nombreux facteurs physiologiques perçus contribuant à la perception 3D. Le tout premier est probablement la distance interoculaire. Bien qu'une valeur moyenne interoculaire d'environ 65mm soit souvent citée, des diversités existent parmi une population : diversités masculines/feminines, diversités enfants/adultes ou diversités ethniques. Elles peuvent mener à la perception vraiment différente de la 3D.

Les modèles de la géométrie montrent le rapport entre cette distance inter-occulaire et la profondeur perçue. Puisque la gamme de la distance peut changer de 50mm (enfants) jusqu'à 70mm, la profondeur perçue changera la même manière. En d'autres termes il n'y a aucun moyen d'assurer qu'un contenu donné soit perçu de la même manière par tout le monde même lorsqu'un certain état de visionnement est prévu. Puisque le système humain de vision évolue avec le temps, notre capacité de percevoir le stéréo sera également variable. Le facteur d'âge est important car notre capacité de converger et de s'adapter est modifiée en fonction de l'âge. A l'inverse, il y a également un facteur de formation qui nous aide après plusieurs visionnements à améliorer notre capacité de percevoir le stéréo.

De plus, il y a aujourd'hui des limitations pour montrer un contenu stéréo sur une TV 3D. S'il est possible de contrôler correctement la profondeur d'un contenu de film dans la post-production, il est plus difficile de la faire pour séquences de prise de vue en directe. En effet la question de 1' Hyper-divergence ou de l'hyper-convergence se produit plus probablement et engendre une fatigue visuelle en regardant le contenu stéréo. En résumé il y a de toute façon également un besoin de pouvoir à l'extrêmité de la chaîne moduler globalement l'effet 3D pour assurer qu'il sera accepté par un observateur. C'est la raison pour laquelle nous proposons une technologie appelée « l'ajustement de l'intensité 3D » pour aider l'utilisateur adaptant le niveau 3D à sa capacité visuelle.

Dans certaines configurations le contenu 3D présenté, qui va donc solliciter le système oculomoteur, peut générer une fatigue du système visuel si cette sollicitation se fait sur la durée d'un film par exemple.

Il est connu de réduire l'amplitude des disparités présentées sur l'écran. La puissance de l'effet 3D est ainsi réduite et le confort visuel augmenté.

Or le facteur de réduction est déterminé approximativement de façon à aboutir à un meilleur confort visuel mais une perte non nécessaire de profondeur peut être engendrée ou à l'inverse un meilleur confort visuel pourrait être obtenu.

Le problème à résoudre est donc de savoir quel doit être le facteur de réduction de l'amplitude des disparités et comment l'appliquer sur l'amplitude des disparités

L'invention consiste en une méthode d'ajustement de la disparité d'un contenu 3D pour un observateur des images 3D de ce contenu. Cette méthode comprend

les étapes de réaliser une série de tests pour en déduire les valeurs de seuils de convergence et de divergence de l'observateur, puis de déterminer les valeurs de disparité maximale et minimale du contenu initial et enfin de modifier le contenu 3D original de façon à ce que les disparités maximales et minimales du contenu modifié correspondent aux seuils de divergence et convergence respectivement.

L'invention a l'avantage d'adapter le contenu 3D aux capacités visuelles d'un observateur pour un meilleur confort d'observation.

Préférentiellement la réalisation de tests pour en déduire les seuils de vergence consiste à déterminer les seuils de transition entre la fusion et la diplopie binoculaire en convergence et en divergence par présentation d'une suite d'éléments graphiques de disparités différentes.

Selon une variante de l'invention, la réalisation de tests pour en déduire les seuils de vergence consiste à déterminer les seuils de transition entre la fusion et la diplopie binoculaire en convergence et en divergence par déplacement par l'observateur d'éléments graphiques pour obtenir des disparités différentes.

Selon une variante de l'invention, la modification du contenu initial est basée sur l'adaptation de la fenêtre de profondeur du contenu initial déterminée en fonction des disparités maximales et minimales à la fenêtre de profondeur déterminée en fonction des valeurs des seuils de convergence et de divergence.

Selon une variante de l'invention, la modification du contenu 3D correspondant à une vue d'image droite et une vue d'image gauche se fait par interpolation de vues d'une des images initiales droite ou gauche ou se fait par interpolation de vues des images initiales droite et gauche.

Selon une variante de l'invention, la modification du contenu 3D correspondant à une vue d'image droite et une vue d'image gauche se fait par modification des valeurs de la table de disparité associée soit à la vue droite, soit à la vue gauche

Selon une variante de l'invention, la mesure des seuils de vergence, la modification de la disparité du contenu 3D se commande manuellement en fonction d'une table de correspondance Ou selon une autre variante de l'invention, la modification de la disparité du contenu 3D est appliquée systématiquement à tout contenu diffusé pour l'observateur ou sur demande de l'observateur.

Les caractéristiques et avantages de l'invention mentionnée ci-dessus, ainsi que d'autres, apparaîtront plus clairement à la lecture de la description suivante, faite en relation avec les dessins joints, dans lesquels :

- la figure 1 représente une méthode de test selon l'invention pour déterminer les seuils de convergence et divergence ;
- la figure 2 représente une autre méthode de test selon l'invention pour déterminer les seuils de convergence et divergence;
- la figure 3 est un schéma montrant la réduction de la fenêtre de profondeur ;
- la figure 4 représente différentes stratégies d'interpolation de vues ;
- la figure 5 représente différentes interpolations de vues et un moyen de commande du choix de ces interpolations.

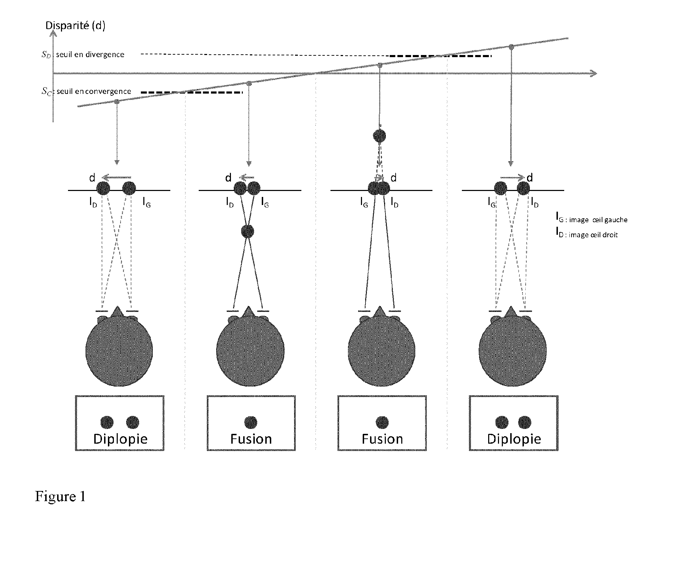

La figure 1 illustre un premier exemple de test visuel pour déterminer les seuils de convergence et divergence. Le test visuel a pour but d'estimer les capacités de convergence et divergence binoculaire de l'observateur. Il peut être réalisé de diverses manières, avec des stimuli et des protocoles différents.

Un premier exemple tel que représenté par la figure 1 consiste à présenter un objet graphique, tel un cercle ou une ligne verticale ou tout autre graphique plus élaboré, à des emplacements différents sur une vue droite $I_D$ et sur une vue gauche $I_G$. La distance d entre ces emplacements qui correspond à la disparité, crée une demande de vergence de la part de l'observateur.

Soit l'observateur réussira à satisfaire cette demande et sera en fusion binoculaire. Il verra alors un seul objet.

Soit il ne réussira pas à la satisfaire et il sera en diplopie, et il verra deux objets. Un seuil $S_c$ en convergence ainsi qu'un seuil en divergence $S_D$ sont donc déterminés.

Ce test consiste, pour une distance d'observateur donné, à présenter diverses configurations de disparité et à chercher le seuil de transition entre la fusion binoculaire correspondant à la visualisation d'un seul objet et la situation de diplopie correspondant à la vision de deux objets. Deux seuils de disparité angulaires pourront ainsi être déterminés : un seuil en convergence $S_C$ et un seuil en divergence $S_D$.

En deçà du seuil en convergence $S_C$, les objets proches apparaîtront en double. Un seul objet, fusionné, sera visible entre les seuils $S_C$ et $S_D$ et enfin les objets seront vus dédoublés au delà du seuil $S_D$. Les seuils $S_C$ et $S_D$ sont les limites de fusion en convergence et en divergence pour l'observateur considéré.

Lors du test, diverses stratégies de présentation des images en disparité sont possibles. La plus simple consiste à présenter toutes les situations dans une fourchette et avec un échantillonnage donné. Cette méthode est dite « des stimuli constants ». Une autre méthode en double escalier dite « double staircase » permet de converger plus rapidement dans la détermination du seuil. Elle consiste en une évaluation du seuil recherché basée sur la présentation consécutive des situations, selon des intensités montantes (escalier ascendant) ou des intensités descendantes (escalier descendant).

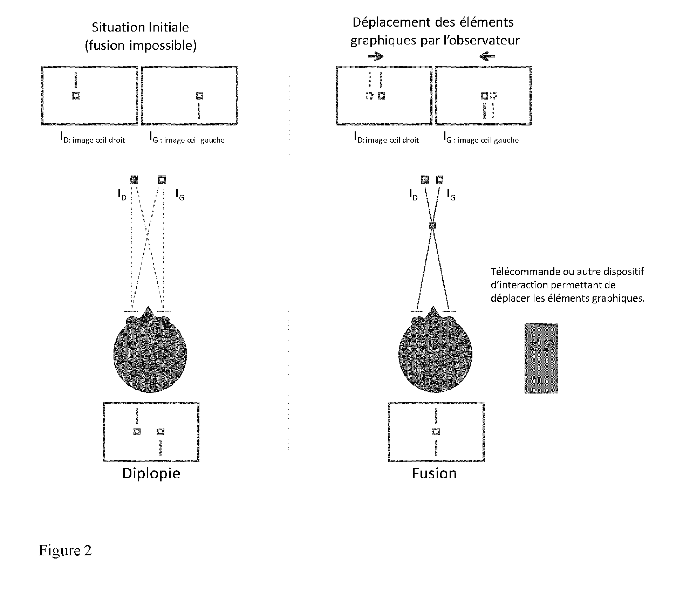

Un deuxième exemple de test tel qu'illustré par la figure 2, consiste à présenter des objets graphiques tel par exemple un cercle, une ligne verticale ou un objet graphique plus élaboré à l'observateur en lui donnant la possibilité de les déplacer par télécommande ou tout autre moyen connu de l'homme du métier, afin de les aligner. Un des objets $O_F$ sera affiché dans les deux vues, droite et gauche, de manière à définir un point de fixation. Au moins un autre objet $O_D$ sera uniquement affiché pour l'oeil droit et au moins un autre objet $O_G$ sera affiché pour l'oeil gauche. A partir d'un état initial où (par exemple) $O_D$ présente un déplacement latéral (disparité angulaire) donné par rapport à $O_G$ l'observateur doit aligner les trois objets verticalement, en agissant par exemple sur la télécommande de son téléviseur. Si l'état initial a une valeur de disparité angulaire importante et rendant la fusion binoculaire impossible, l'observateur devra indiquer l'instant où la fusion deviendra possible lors du rapprochement de $O_G$ et $O_D$. Le seuil de fusion $S_C$ ou $S_D$ sera enregistré à cet instant comme caractéristique de l'observateur pour être utilisée dans l'adaptation du contenu.

Alternativement, le test pourra aussi partir d'une situation fusionnée à faible disparité ou d'une situation en diplopie pour rechercher la disparité seuil où se produit la diplopie (double vision).

Ce test pourra être réalisé en convergence ou en divergence, donnant respectivement le seuil de fusion $S_C$ et le seuil de fusion $S_D$.

Une fois le test visuel ci-dessus réalisé, l'observateur est caractérisé pour ce qui concerne ses seuils de fusion en convergence et en divergence $S_C$ et $S_D$.

L'invention consiste ensuite à utiliser les résultats de ce test visuel afin d'estimer les capacités visuelles d'un observateur pour adapter la puissance d'un effet 3D. Il permet donc d'adapter le contenu 3D à ces capacités pour un meilleur confort d'observation.

L'adaptation du contenu va consister en une analyse du contenu initial pour déterminer les valeurs de disparités maximales en convergence $d_C^{max}{}_{(contenu)}$ et en divergence $d_D^{max}{}_{(contenu)}$ pour des portions temporelles de contenu. On entend par une segmentation temporelle du contenu une découpe en plans-séquences par exemple.

Une modification des disparités du contenu par une transformation T a lieu de façon à ce que les disparités maximales correspondent aux limites de fusion de l'observateur :

Pour que la correspondance soit établie, les disparités maximales en convergence $d_C^{max}{}_{(contenu)}$ et en divergence $d_D^{max}{}_{(contenu)}$ doivent être égales ou au delà des seuils de convergence et divergence déterminées lors des tests précedents. de la façon suivante :

$$d_C^{max}{}_{T(contenu)} < S_C \text{ et } d_D^{max}{}_{T(contenu)} < S_D$$

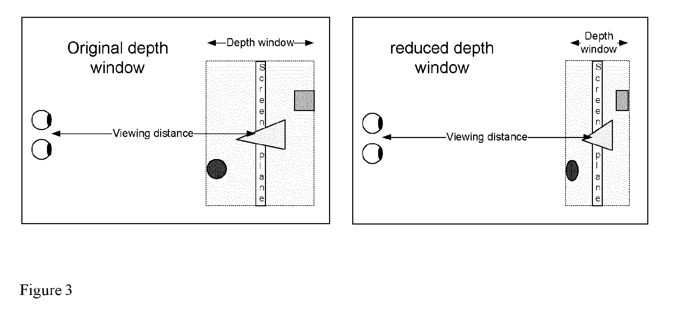

La figure 3 illustre les résultats de cette transformation. Sur la figure 3a, une fenêtre de profondeur du contenu initial est représentée pour un observateur se trouvant à une distance d'observation définie. La profondeur de cette fenêtre est déterminée en fonction de cette distance et des données maximales en convergence et divergence. Sur la figure 3b, la profondeur de la fenêtre est réduite après la transformation du contenu.

L'idée fondamentale est donc de pouvoir modifier globalement la profondeur d'un contenu. Comme illustré sur le schéma 3, la technologie peut réduire le budget de profondeur symétriquement. Ce n'est pas un décalage simple du contenu vers l'arrière mais vraiment une modification complète du contenu basé sur la disparité. Les figures 3a et 3b représente donc les fenêtres de profondeur correspondant à l'image initiale et transformée. Le traitement laisse réduire cette profondeur par un facteur de 2 dans cet exemple. Ainsi les objets de fond et de premier plan seront tous les deux plus près du plan d'écran. L'ajustement de l'intensité 3D est possible dès qu'une carte dense de disparité est associée au contenu stéréo. L'idée fondamentale est de reconstruire des nouvelles images initiales des images 1 ou 2 qui sont situées entre celle gauche et celle de droite dans la limite de la profondeur.

De nombreux modes de mise en oeuvre sont possibles pour la modification des disparités par la transformation $T$. Le plus simple consiste à appliquer le même traitement de réduction des disparités pour l'ensemble d'une séquence, par exemple en appliquant la même interpolation en disparité sur toutes les paires d'images ou sur toutes les vues de la séquence.

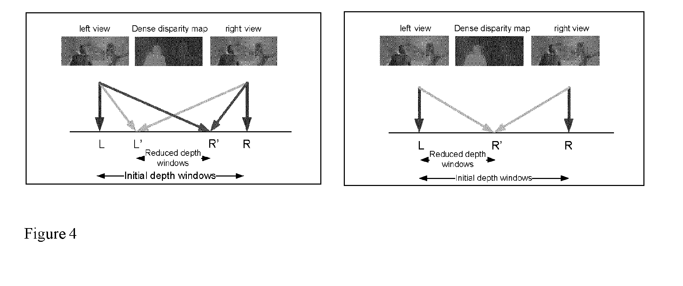

Ces interpolations sont illustrées par la figure 4. Sur la figure 4a, la vue gauche L est remplacée par la vue interpolée L'. La vue droite R est remplacée par la vue interpolée R'.

Sur la figure 4b, seule une des deux vues est interpolées.

La fenêtre de profondeur correspondant aux vues interpolées est réduite par rapport à la fenêtre de profondeur initiale.

La figure 4 illustre donc les 2 options que nous pouvons appliquer, selon que l'une des deux vues entrantes soit gardée ou pas. Dans une solution donc les vues gauche et droite sont interpolés L' et R'. Ce qui signifie un calcul intensif pour créer les 2 vues interpolées mais le même point de vue que pour le contenu initial est conservé. Dans l'autre solution seulement la vue de droite R' est interpolé. Ce qui signifie seulement une image interpolée au lieu de 2 mais le point de vue est légèrement modifié.

Un traitement direct des valeurs de la carte de disparité est également envisagé. La transformation permettra le remplacement de chaque valeur de disparité de la carte par une valeur calculée sur la base du rapport de profondeur de la fenêtre initiale et de celle calculée à l'aide des seuils de convergence et de divergence.

Des traitements locaux sont également envisageables qui vont par exemple contraindre les objets en jaillissement à se retrouver dans les limites de disparité voulues, au prix d'une déformation de la scène.

Ce procédé peut être intégré aux décodeurs de télévision numérique, ou aux téléviseurs ajoutant alors une fonction d'adaptation du contenu aux capacités de vision 3D d'un observateur.

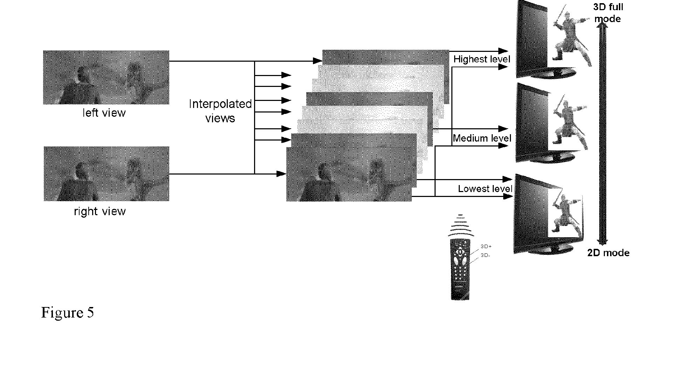

Une télécommande par exemple ou toutes autres commandes permettra de sélectionné la profondeur de l'image souhaitée et d'obtenir une image 3D basée sur un ensemble de deux images interpolées telles représentées sur la figure 5.

La graduation de l'échelle 2D vers 3D peut se faire, par exemple, en fonction des valeurs de seuils de convergence et divergence.

Dans un premier module, par exemple, le test visuel fera partie de l'interface utilisateur. Dans un second module, le traitement d'adaptation du contenu fera partie des modules de traitement du signal du produit.

**Revendications**

1. Méthode d'ajustement de la disparité d'un contenu 3D pour un observateur des images 3D de ce contenu, comprenant les étapes de :

   - réaliser une série de tests pour en déduire les valeurs du seuil de convergence et du seuil de divergence de l'observateur ;
   - déterminer la valeur de disparité maximale et la valeur de disparité minimale du contenu 3D initial ;
   - modifier les valeurs de disparité du contenu 3D initial de façon à ce que les valeurs de disparités maximale et minimale du contenu modifié correspondent aux valeurs de seuils de divergence et convergence respectivement.

2. Méthode selon la revendication 1 **caractérisée en ce que** la réalisation de tests pour en déduire les valeurs des seuils de convergence et de divergence consiste à déterminer les seuils de transition entre la fusion et la diplopie binoculaire en convergence et en divergence par présentation d'une suite d'éléments graphiques de disparités différentes à l'observateur.

3. Méthode selon la revendication 1 **caractérisée en ce que** la réalisation de tests pour en déduire les valeurs des seuils de convergence et de divergence consiste à déterminer les seuils de transition entre la fusion et la diplopie binoculaire en convergence et en divergence par déplacement par l'observateur d'éléments graphiques pour obtenir des disparités différentes.

4. Méthode selon la revendication 2 ou 3 **caractérisée en ce que** la modification du contenu 3D initial est basé sur l'adaptation de la fenêtre de profondeur du contenu initial déterminée en fonction des disparités maximales et minimales à la fenêtre de profondeur déterminée en fonction des valeurs des seuils de convergence et de divergence.

5. Méthode selon la revendication 4 **caractérisée en ce que** le contenu 3D correspondant à une vue d'image droite et une vue d'image gauche, la modification du contenu 3D initial se fait par interpolation de vue d'une des images initiales droite ou gauche.

6. Méthode selon la revendication 4 **caractérisée en ce que** le contenu 3D correspondant à une vue d'image droite et une vue d'image gauche la modification du contenu 3D initial se fait par interpolation de vue des images initiales droite et gauche.

7. Méthode selon la revendication 4 **caractérisée en ce que** la modification du contenu 3D initial correspondant à une vue d'image droite et une vue d'image gauche se fait par modification des valeurs d'une table de disparité associée soit à la vue droite, soit à la vue gauche.

8. Méthode selon la revendication 1 **caractérisée en ce que** suite à la mesure des valeurs de seuils de vergence, la modification de la disparité du contenu 3D se commande manuellement en fonction d'une table de correspondance.

9. Méthode selon la revendication 1 **caractérisée en ce que** suite à la mesure des valeurs de seuils de vergence, la modification de la disparité du contenu 3D est appliquée systématiquement à tout contenu diffusé pour l'observateur.

10. Méthode selon la revendication 1 **caractérisée en ce que** suite à la mesure des valeurs de seuils de vergence, la modification de la disparité du contenu 3D est appliquée sur demande de l'observateur.

Figure 1

Situation Initiale
(fusion impossible)

Déplacement des éléments
graphiques par l'observateur

$I_D$: image œil droit    $I_G$ : image œil gauche

$I_D$: image œil droit    $I_G$ : image œil gauche

$I_D$    $I_G$

$I_D$    $I_G$

Télécommande ou autre dispositif
d'interaction permettant de
déplacer les éléments graphiques.

Diplopie

Fusion

Figure 2

Figure 3

Figure 4

Figure 5

Europäisches
Patentamt

European
Patent Office

Office européen
des brevets

**RAPPORT DE RECHERCHE EUROPEENNE**

Numéro de la demande

EP 11 18 6955

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/190180 A1 (JIN ELAINE W [US] ET AL) 1 septembre 2005 (2005-09-01) * le document en entier * ----- | 1-10 | INV. H04N13/00 |
| X | EP 2 299 728 A2 (FUJIFILM CORP [JP]) 23 mars 2011 (2011-03-23) * le document en entier * ----- | 1-10 | |
| A | US 2008/240549 A1 (KOO JAE-PHIL [KR] ET AL) 2 octobre 2008 (2008-10-02) * le document en entier * ----- | 1-10 | |

| | DOMAINES TECHNIQUES RECHERCHES (IPC) |
|---|---|
| | H04N |

Le présent rapport a été établi pour toutes les revendications

| Lieu de la recherche | Date d'achèvement de la recherche | Examinateur |
|---|---|---|
| Munich | 17 février 2012 | Doswald, Daniel |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 6955

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-02-2012

| Document brevet cité au rapport de recherche | | Date de publication | Membre(s) de la famille de brevet(s) | | Date de publication |
|---|---|---|---|---|---|
| US 2005190180 | A1 | 01-09-2005 | AUCUN | | |
| EP 2299728 | A2 | 23-03-2011 | EP | 2299728 A2 | 23-03-2011 |
| | | | EP | 2429200 A2 | 14-03-2012 |
| | | | JP | 2011064894 A | 31-03-2011 |
| | | | US | 2011063421 A1 | 17-03-2011 |
| US 2008240549 | A1 | 02-10-2008 | CN | 101276060 A | 01-10-2008 |
| | | | KR | 20080088305 A | 02-10-2008 |
| | | | US | 2008240549 A1 | 02-10-2008 |

EPO FORM P0460

Pour tout renseignement concernant cette annexe : voir Journal Officiel de l'Office européen des brevets, No.12/82